Europäisches Patentamt

European Patent Office

Office européen des brevets

(19)

(11) Publication number: **0 151 015**
A2

(12) # EUROPEAN PATENT APPLICATION

(21) Application number: **85300558.5**

(22) Date of filing: **28.01.85**

(51) Int. Cl.⁴: **G 01 L 1/24**, G 01 M 11/00

(30) Priority: **26.01.84 GB 8402045**

(43) Date of publication of application: **07.08.85**
**Bulletin 85/32**

(84) Designated Contracting States: **AT CH DE FR IT LI NL SE**

(71) Applicant: **The General Electric Company, p.l.c., 1 Stanhope Gate, London W1A 1EH (GB)**

(72) Inventor: **Webb, David John, 18 Oxford Court, Chelmsford Essex (GB)**
Inventor: **Collier, Martin John, 78, Long Fielfs, Marden Ash Ongar Essex CM5 9DE (GB)**

(74) Representative: **Tolfree, Roger Keith, GEC p.l.c. Central Patents Department Chelmsford Office Marconi Research Centre West Hanningfield Road, Great Baddow Chelmsford Essex CM2 8HN (GB)**

(54) Apparatus for sensing strain in a transparent fibre.

(57) The strain in an optical fibre 3 drawn from a furnace 1 before passing into a coating bath 5 is measured using an optical beam from a laser 6 which is caused to intercept the fibre. The polarisation which may initially be linear or circular, is changed during passage through the fibre by an amount dependent on strain. The components of the emerging beam polarised in planes P1 and P2 are separated by a beam splitter 8, detected at D1 and D2 and compared at 9 to give a measure of the change in polarisation and therefore a measure of strain. The maximum output of the comparator 9 is calculated at 10 so as to ensure that the final output at 1A is not affected by occasions when the laser beam passes to one side of the fibre 3 rather than throug it. Vibration of the fibre 3 and of the mirror 7 ensures that the beam passes through the fibre at least some of the time. In an alternative system (Figure 4) the mirror 7 is omitted. Instead the laser 6 and detectors D1 and D2 are mounted on a reciprocating platform.

EP 0 151 015 A2

## APPARATUS FOR SENSING STRAIN
## IN A TRANSPARENT FIBRE

This invention relates to apparatus for sensing strain in a transparent fibre. In a fibre manufacturing plant a glass preform passes into a furnace where it melts. The molten glass is drawn from the furnace; through a region where it solidifies from the molten state; and then into a coating bath where the fibre is coated with a protective coating of synthetic plastics material. It is necessary to measure the strain in the fibre between the outlet of the furnace and the coating apparatus and to make adjustments, for example to the temperature of the furnace, so as to maintain the strain value within given tolerances. This requirement presents considerable difficulties since the fibre is moving at very high speed, is extremely thin and fragile before coating and may be subject to vibration making it impossible to assume that it is in a given position at a given time.

This invention provides apparatus for sensing strain in a transparent fibre comprising: a source of electromagnetic radiation for directing a beam of radiation having a particular polarisation characteristic into a region containing the fibre, detecting means for detecting a change in the polarisation on passing through the said region; and maximum-value detecting means for detecting a maximum value of the said change, the said maximum value occuring during relative movement of the beam and the fibre when the fibre is directly in the beam and being indicative of strain in the fibre.

The change in the polarisation characteristic can be a change from linear to elliptical polarisation or from circular to elliptical polarisation. The technique of detecting the maximum value of the change in polarisation characteristic in passing through the region containing the fibre overcomes the problem of vibration of the fibre because there will be little or no such change at times when the beam misses the fibre. It also simultaneously eliminates the need for accurate alignment of the electromagnetic beam with the fibre. Because of the small diameter of the fibre such alignment would present a considerable problem even if the fibre were stationary. The invention thus enables vibration of the fibre to be transformed from a disadvantage into an advantage.

During tests is has been found that, in addition to the aforementioned vibration, the fibre can drift laterally with respect to its length over a distance of a few millimetres. Such drifting can be due to the preform not being perfectly straight or due to movements of the coating bath under the control of an adjustment mechanism which ensures that the coating is applied concentrically with respect to the fibre. This drifting of the mean position of the fibre means that the vibration cannot necessarily be relied upon to ensure that the beam at least sometimes intersects the fibre. Where vibration of the fibre cannot be relied upon it may be advantageous to include means for sweeping the beam of radiation across the said region. This can be done by using for example a mirror, to deflect an intially fixed beam of radiation. A preferred method however is to mount a source of the radiation, the detecting means and associated optical components on a support which is vibrated laterally with respect to the fibre. The source of the electromagnetic radiation is preferably a laser operating at visible or infra-red wavelengths but of course other possibilities would be practicable.

The detecting means preferably includes a polarising beam splitter which splits the radiation, after passing through the region containing the fibre, into components polarised in the first and second orthogonal polarised components. By using the ratio of the output of one detector to the sum of the outputs of both detectors the effects of fluctuations in intensity of the radiation source can be eliminated. This similarly eliminates the effects of changes in transmittivity between the source of radiation and the detectors.

One way in which the invention may be performed will now be described by way of example with reference to the accompanying drawings which are of a very schematic nature and in which the components are not shown to scale. In the drawings:

Figure 1 shows an optical glass fibre manufacturing plant employing a strain sensor constructed in accordance with the invention;

Figure 2 is a curve showing variation in the signal on line 1A of Figure 1 with strain without the use of a quarter wave plate 11;

Figure 3 is a similar curve when the quarter wave plate 11 is used, and;

Figure 4 shows a manufacturing plant similar to that of Figure 1 but employing a strain sensor which is different but is also constructed in accordance with the invention.

Referring to the drawing a furnace 1 incorporates a heater controlled by a signal on line 1A. A glass preform 2 enters the top of the furnace where it melts. It is drawn by means, not shown, from the base of the furnace 1 and solidifies to form a fine glass fibre 3 in a region 4 between the furnace 1 and a plastics coating bath 5. The coated fibre emerges from an orifice in the bottom of the bath 5 and is subsequently wound on a storage drum (not shown). Means, shown in the form of a schematic block 5A is

- 5 -

0151015

included to sense any error of concentricity of the fibre and coating and to correct this by adjustment of the position of the coating bath 5 as a whole or just of its orifice.

In the region 4 the fibre, whose diameter is shown greatly enlarged on the drawing, may vibrate from side to side as indicated by the double headed arrow VIB.

A laser 6 projects a beam of visible light to a mirror 7 mounted on a shaft 7A vibrated by a mechanism 7B about an axis X-X. The light beam reflected from the mirror is thus made to scan repetitively across the region 4 containing the fibre 3 thereby ensuring that it intercepts the latter at least one time during each scan, whether or not the fibre is vibrating. In this embodiment of the invention the laser is of a type to produce light polarised in a first plane at 45$^{\circ}$ to the vertical as indicated by the arrow P1. In alternative embodiments of the invention a separate polarising device may be included for this purpose. A lens L1 serves to focus the light beam, which might typically be about 2mm in diameter to a point in the region 4 smaller than the diameter of the fibre and typically about 100 microns for a fibre of 125 microns diameter. A second lens L2 collects light after passing through the region 4.

In passing through the fibre 3 the polarisation of the light is changed to a degree dependent on the

- 6 -

strain in the fibre so that the beam emerging from the fibre is elliptically polarised having components polarised in the plane P1 and in an orthogonal plane P2. This effect of changing the polarisation by an amount dependent upon strain is well known to those skilled in the art of optics. The components polarised in planes P1 and P2 are separated by a polarising beam splitter 8 (known per se) and are detected by respective detectors D1 and D2.

A comparator 9, carried on a circuit board B, compares the ratio P2/(P1 + P2) or, if as will normally be the case, P1 is very much greater than P2, the ratio P2/P1. This ratio is representative of the change in polarisation and is independent of changes in the overall intensity of light reaching the beam splitter 8 due for example to ageing of the laser 6, changes in transmittivity of the medium between laser 6 and the beam splitter 8.

The maximum value of the output of the comparator C during each of successive set time periods sufficient to include at least one vibration of fibre 3 and/or of mirror 7 is calculated at 10 and this value, which represents the strain in the fibre, is used as the control signal on line 1A to control the temperature of the furnace 1 which in turn adjusts the consistency of the glass so as to ensure that the strain in fibre 3 is within predetermined limits.

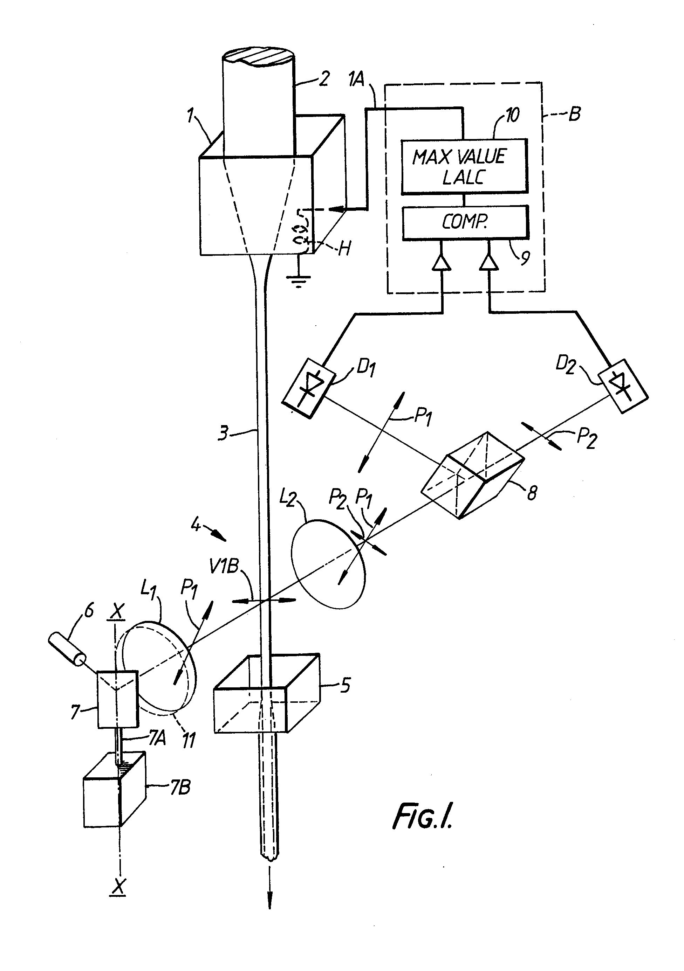

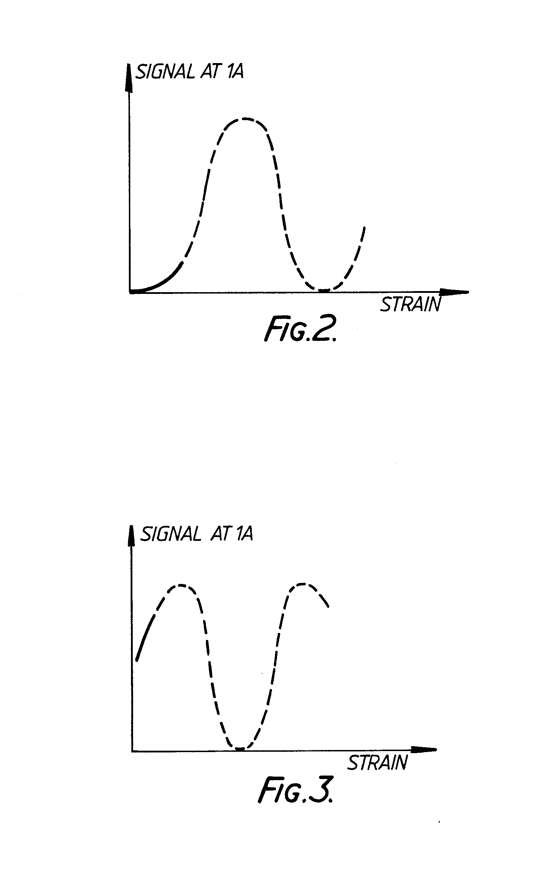

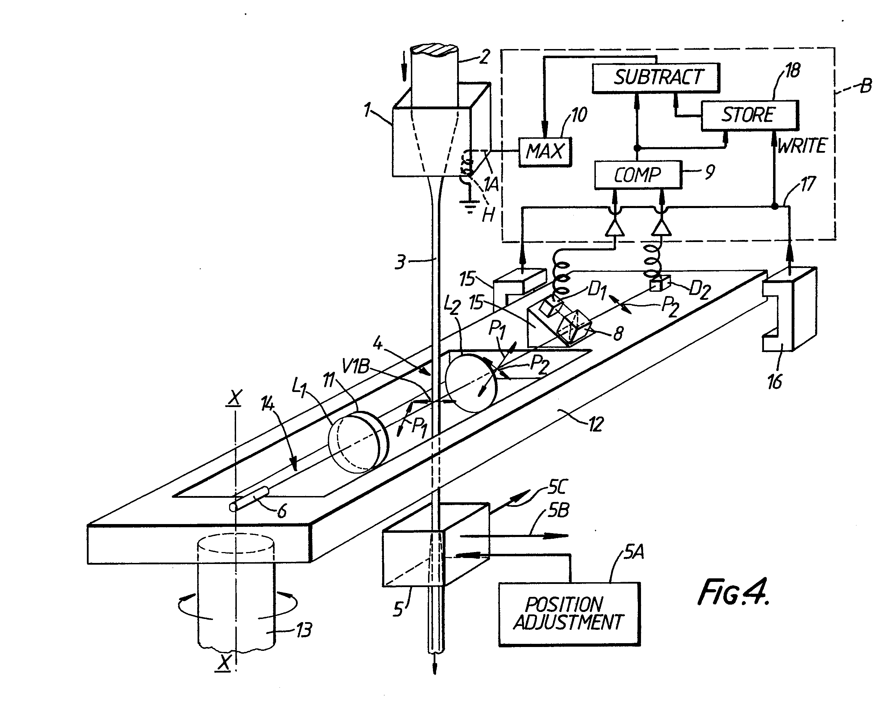

Figure 2 shows the relationship between strain in the fibre and the signal at 1A. In practice only the range of strains and signal amplitudes shown by the continuous part of the line are encountered. This part of the curve is notably not linear and has a relatively small slope which means that the apparatus is not as sensitive as it would be if another part of the curve were used. This situation can be improved by inserting a quarter wave plate shown in broken lines at 11 on Figure 1 so as to produce a circularly polarised light beam which is focussed into the region 4 containing the fibre. Where the laser is of a type which does not itself produce linear polarised light, a linear polariser can be combined with the quarter wave plate 11 to produce a circular polariser. The effect of the fibre on the light beam is then to change its polarisation characteristics from circular to elliptical (instead of from linear to elliptical). This means that the variation in the signal at 1A with changes in strain is as shown on Figure 3. From Figure 3 it can be seen that the variation of signal over the range of strains encountered in practice (as depicted by the continuous part of the curve) is almost linear and is much greater (i.e. the slope of the curve is greater) than Figure 2.

In the embodiment of Figure 4, components identical to those of Figure 1 are denoted by identical reference numerals. The embodiment of Figure 4 differs however in a number of ways which will now be described.

The laser 6, which is of a type which produces linearly polarised light in plane P1 is mounted on a platform 12 which is caused to vibrate by rotation on a shaft 13 about a vertical axis X-X. The light passes from the laser 6 through a lens L1 and quarter wave plate 11 identical to those of Figure 1 (but reversed in order, the order being of no significance), these components being mounted by means, not shown, in a rectangular aperture 14 of the platform 12. The glass fibre passes through this aperture on its way from the furnace 1 to the coating bath 5 and is intersected by the beam during each reciprocating movement of the platform. It is then collimated by lens L2, also mounted on platform 12 and located in the aperture 14, and passes to a beam splitter 8 and detectors D1 and D2 all of which are likewise mounted on platform 12. Because of the angle of the plane D1 of polarisation, the beam splitter 8 and the diode D1 are mounted on a sloping support 15 on the platofrm 12. The outputs of the photodiodes D1 and D2 are connected by flexible conductors to the circuit board B to accommodate the relative movement between the platform 12 and the board B.

When the platform 12 is at each extreme position of reciprocation it interrupts a light beam within an optical switch 15 of 16 thereby producing an impulse on line 17. At the time of this impulse the beam from the laser 6 can be assumed not to be passing through the optical fibre and the output from the comparator 9 can be used as a reference by which zero error can be eliminated from the strain measurement made during the next sweep of the beam across the optical fibre. To this end the impulse on line 17 from switch 16 is applied to a store 18 to write into the latter a value representing the current output of the comparator 9. This value is held during a period until the next impulse, from switch 15. During this period the varying output from the comparator 9 is subtracted from the content of the store, to eliminate zero error, before being passed to the maximum value calculator 10. The latter may be re-set by the impulses on line 17.

CLAIMS

1.    Apparatus for sensing strain in a transparent fibre comprising; a source of electromagnetic radiation for directing a beam of radiation having a particular polarisation characteristic into a region containing the fibre, detecting means for detecting a change in the polarisation on passing through the said region; and maximum value detecting means for detecting a maximum value of the said change, the said maximum value occurring during relative movement of the beam and the fibre when the fibre is directly in the beam and being indicative of strain in the fibre.

2.    Apparatus according to claim 1 including means for causing the beam to scan repetitively through the said region.

3.    Apparatus according to claim 2 in which the means for causing the beam to scan includes an optical element arranged to deflect the beam and drive means for imparting a reciprocating pivoting movement to the said optical element.

4.    Apparatus according to claim 2 in which the means for causing the beam to scan includes drive means for moving the source of radiation.

5.    Apparatus according to claim 4 in which the source of radiation and the detecting means are mounted on a support and in which the drive means is adapted to move the support.

0151015

6. Apparatus according to any preceding claim included as part of a machine which, in use, causes the fibre to vibrate in the said region.

7. Apparatus according to any preceding claim in which the detecting means includes; a polarising beam splitter which splits the radiation, after passing through the said region, into components polarised in the first and second planes respectively; comparator means for comparing an output of the first detector with that of the second detector or with the sum of the detector outputs; and means for sensing a maximum value of the result of comparison.

8. Apparatus according to any preceding claim arranged to sense the strain in a part of a fibre travelling from a fibre drawing apparatus to a fibre coating apparatus in an optical fibre manufacturing plant.

9. Apparatus according to any preceding claim in which the said particular polarisation characteristic is circular polarisation.

10. A strain sensor substantially as described with reference to Figures 1 and 2 of the accompanying drawings and substantially as illustrated schematically in Figure 1.

11. A strain sensor substantially as described with reference to Figures 1 and 3 of the accompanying drawings and substantially as illustrated schematically in Figure 1.

12.    A   strain sensor substantially as described   with
reference   to Figure 4 of the accompanying drawings and
substantially as illustrated therein.

Fig.1.

0151015

Fig.2.

Fig.3.

0151015

Fig.4.